# Europäisches Patentamt
## European Patent Office
## Office européen des brevets

(19)

(11) Veröffentlichungsnummer: **0 258 522 B1**

# (12) EUROPÄISCHE PATENTSCHRIFT

(45) Veröffentlichungstag der Patentschrift: **06.05.92**

(51) Int. Cl.5: **F16H 25/22**

(21) Anmeldenummer: **87102402.2**

(22) Anmeldetag: **20.02.87**

(54) **Linearantriebseinheit.**

(30) Priorität: **28.08.86 DE 3629279**

(43) Veröffentlichungstag der Anmeldung:
**09.03.88 Patentblatt 88/10**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
EP-A- 0 006 082      EP-A-00 907 68
DE-A- 1 931 860      DE-A- 3 245 119
DE-A- 3 428 996      DE-C- 855 785
DE-C- 1 155 950      GB-A- 779 420
US-A- 2 444 886

(73) Patentinhaber: **Pradler, Josef**
**Neue Weilheimer Strasse 14**
**W-7312 Kirchheim/Teck(DE)**

(72) Erfinder: **Pradler, Josef**
**Neue Weilheimer Strasse 14**
**W-7312 Kirchheim/Teck(DE)**

(74) Vertreter: **Klunker . Schmitt-Nilson . Hirsch**
**Winzererstrasse 106**
**W-8000 München 40(DE)**

**Beschreibung**

Gegenstand der Erfindung ist eine Linearantriebseinheit, mit:

(a) einem Gehäuse, in dem ein Antriebsmotor untergebracht ist;

(b) einer linear antreibbaren Abtriebsstange;

(c) einem mit dem Motor und der Abtriebsstange in Antriebsverbindung stehenden Umsetzungstrieb, der Rotationsbewegung in Linearbewegung der Abtriebsstange umsetzt; und

(d) einer Einrichtung zum Abschalten des Antriebsmotors bei überschreiten einer von der Linearantriebseinheit gelieferten, vorbestimmten Axialkraft, wobei eine Relativbewegung zweier Bauteile gegen die Federkraft einer Federeinheit stattfindet, dadurch gekennzeichnet,

(e) daß an dem der Abtriebsstange entgegengesetzten Axialende des Gehäuses ein die Axialkraft der Linearantriebseinheit ableitendes Befestigungsteil vorgesehen ist, das relativ zu dem Gehäuse undrehbar gehalten ist und durch eine Stirnwandöffnung axial verschiebbar in das Gehäuse geführt ist;

(f) daß die Federeinheit zwischen einer an dem Befestigungsgebildeten Schulter und einem Widerlager in dem Gehäuse vorgesehen ist;

(g) daß das Befestigungsteil mit einem Betätigungsteil versehen ist, das mindestens einen Schalter bei Überschreiten der vorbestimmten Axialkraft und daraus resultierender, genügend großer Verschiebung des Befestigungsteils in der Stirnwandöffnung betätigt.

Linearantriebseinheiten mit den Merkmalen (a), (b) und (c) sind aus den Dokumenten EP-A-0 090 768 und DE-A-34 28 996 bekannt. Bei diesen Linearantriebseinheiten ist die von der gelieferten Axialkraft abhängige Abschaltfunktion nicht an ein endseitiges Befestigungsteil der Linearantriebseinheit gekoppelt, das undrehbar gehalten und axial verschiebbar durch eine stirnwandöffnung des Gehäuses der Linearantriebseinheit geführt ist.

Die erfindungsgemäße Linearantriebseinheit verfügt somit über eine spezielle, von der Linearkraft der Abtriebsstange abhängige Abschaltung des Antriebsmotors. Über einem, vorzugsweise einstellbaren, Grenzwert liegende Längskräfte der Abtriebsstange äußern sich als axiale Ausweichbewegung des Befestigungsteils. Eine kraftabhängige Abschaltung ist unabhängig von einer abtriebsstangenpositionsabhängigen (End-)Abschaltung, so daß Endschalterverstellungen keinen Einfluß mehr haben und die Funktion einer Sicherheitsabschaltung auch im gesamten Bereich des Hubs der Abtriebsstange gegeben ist. Die kraftbetätigte Abschaltung enthält in sich aber auch die Funktion der Endabschaltung, wenn man in den Endlagen der Abtriebsstange gegen einen entsprechenden Widerstand bzw. Anschlag fährt. Außerdem wirkt sich ein Rutschen zwischen den weiter unten beschriebenen Umlaufkörpern und der Abtriebsstange, das in Extremfällen theoretisch auftreten kann, nicht mehr nachteilig in einer Verstellung der Relation zwischen den Endschaltern und der Abtriebsstange aus, so daß unabhängig von einem etwaigen Durchrutschen eine präzise Abschaltung gegeben ist. Besonders günstig kann man die Schulter durch eine auf das Befestigungsteil geschraubte Mutter bilden, durch deren Anziehen der Federeinheit eine Vorspannung gegeben werden kann.

Vorzugsweise ist für beide Axial-Ausweichbewegungsrichtungen des Befestigungsteils eine gemeinsame Federeinheit vorgesehen, vgl. Anspruch 2.

In Ausgestaltung der Erfindung ist die Linearantriebseinheit vorzugsweise durch folgende Merkmale gekennzeichnet:

(a) die Abtriebsstange weist einen Hohlbereich auf, der zum Teil über das Gehäuse greift und sich am Außenumfang des Gehäuses axial verschiebbar abstützt;

(b) der Umsetzungstrieb weist einen rotierend von dem Motor antreibbaren Triebkörper auf;

(c) ein Außengewinde des Triebkörpers ist in Eingriff mit einem Innengewinde im Hohlbereich der Abtriebsstange.

Bei einer alternativen, bevorzugten Ausgestaltung der Erfindung weist die Linearantriebseinheit folgende Merkmale auf:

(a) die Abtriebsstange weist einen Hohlbereich auf, der zum Teil über das Gehäuse greift und sich am Außenumfang des Gehäuses axial verschiebbar abstützt;

(b) dem Umsetzungstrieb gehört ein rotierend von dem Motor antreibbarer Triebkörper an, der an seinem Außenumfang eine Umfangs- Rinnenprofilierung sowie eine Verzahnung aufweist;

(c) mehrere, sich axial erstreckende, um die eigene Achse rotierbare Umlaufkörper, die jeweils eine Umfangs- Rinnenprofilierung sowie eine Verzahnung aufweisen;

(d) Eingriff der Rinnenprofilierungen der Umlaufkörper radial innen mit der Rinnenprofilierung des Triebkörpers und radial außen mit einer Umfangs- Rinnenprofilierung am Innenumfang des Hohlbereichs der Abtriebsstange sowie Eingriff der Verzahnungen der Umlaufkörper mit der Verzahnung des Triebkörpers;

(e) eine Ausbildung der Rinnenprofilierungen des Triebkörpers, der Umlaufkörper und des Abtriebsstangen- Hohlbereichs derart, daß bei Rotation dieser Teile zwischen dem Triebkörper und den Umlaufkörpern keine axiale Relativbewegung stattfindet und die Abtriebsstange eine axiale Relativbewegung gegenüber den Umlaufkörpern ausführt.

Die Bauweise der Linearantriebseinheit mit einer Abtriebsstange, die einen mit Innengewinde versehenen, zum Teil über das Gehäuse greifenden Hohlbereich aufweist und sich am Außenumfang des Gehäuses axial verschiebbar abstützt, hat den Vorteil, daß für den Umsetzungstrieb mehr Raum zur Verfügung steht und daß die Abtriebsstange praktisch ohne zusätzlichen Raumbedarf einen großen Durchmesser aufweisen kann, wodurch kräftig dimensionierte Umsetzungstriebe vorgesehen werden können und große Linearantriebskräfte ohne Ausknickgefahr der Abtriebsstange bewältigt werden können.

Die Lagerung der in der Regel durchmesserkleinen Umlaufkörper ist praktisch von Axialkräften freigehalten, und die von der Linearantriebseinheit gelieferten Linearkräfte werden über den Eingriff der Umlaufkörper-Rinnenprofilierungen und der Triebkörper-Rinnenprofilierung mit wählbarer Axiallänge in den Triebkörper eingeleitet. Der Verzahnungseingriff zwischen dem Triebkörper und den Umlaufkörpern stellt sicher, daß zwischen dem Triebkörper und den Umlaufkörpern kein Rutschen auftritt. Vorzugsweise sind die Rinnenprofilierungen des Triebkörpers und der Umlaufkörper als Gewinde ausgebildet, wobei die Gewindesteigungsrichtung der Umlaufkörper entgegengesetzt der Gewindesteigungsrichtung des Triebkörpers ist, also Linksgewinde am Triebkörper und Rechtsgewinde an den Umlaufkörpern oder umgekehrt.

Der Begriff "Rinnenprofilierung" im Zusammenhang mit dem Triebkörper, den Umlaufkörpern und dem Hohlbereich der Abtriebsstange ist gewählt, um sowohl jeweils eine Gruppe paralleler, kreisförmiger, in sich zurückkehrender Rinnen axial nebeneinander als auch einen schraubenlinienförmigen Rinnenverlauf entsprechend einem Gewinde zu umfassen. Wenn die Rinnenprofilierungen beim Triebkörper und bei den Umlaufkörpern nach der erstgenannten Art gestaltet sind, muß die Rinnenprofilierung bei der Abtriebsstange gewindeartig gestaltet sein, um die beabsichtigte Umsetzung von Rotationsbewegung in Linearbewegung zu leisten. Wenn hingegen die Rinnenprofilierungen beim Triebkörper und bei den Umlaufkörpern gewindeartig ausgebildet sind, kann die Rinnenprofilierung bei der Abtriebsstange entweder nach der oben erstgenannten Art oder ebenfalls gewindeartig ausgebildet sein, wobei sowohl eine Gewindesteigungsrichtung entsprechend der Gewindesteigungsrichtung der Umlaufkörper (Gleichlaufbetrieb) als auch eine Gewindesteigungsrichtung entgegengesetzt der Gewindesteigungsrichtung der Umlaufkörper (Gegenlaufbetrieb) in Betracht kommt.

Es soll sichergestellt sein, daß die Umlaufkörper - von einem möglichen kleinen Spiel abgesehen - keine axiale Relativbewegung zu dem Triebkörper ausführen. Wenn man die Rinnenprofilierungen beim Triebkörper und bei den Umlaufkörpern mit steigungsfreien Rinnen ausbildet, ist man im Verhältnis der Durchmesser von Triebkörper einerseits und Umlaufkörpern andererseits frei. Wenn man hingegen die Rinnenprofilierungen von Triebkörper und Umlaufkörpern jeweils mit Steigung ausbildet, muß man entweder ein Durchmesserverhältnis 1:1 zwischen Triebkörper einerseits und Umlaufkörpern andererseits wählen oder, was bevorzugt ist, beim Triebkörper einen Gewinde-Teilkreisdurchmesser wählen, der ein ganzzahliges Vielfaches des jeweiligen Gewinde-Teilkreisdurchmessers bei den Umlaufkörpern beträgt. Entsprechendes gilt für die Teilkreise der Verzahnungen. Damit nun die Umlaufkörper keine axiale Relativbewegung zu dem Triebkörper ausführen, muß das Gewinde des Triebkörpers eine Mehrgängigkeit entsprechend dem genannten ganzzahligen Vielfachen aufweisen, vgl. Anspruch 6. Besonders bevorzugt sind Triebkörper mit zweigängigem Gewinde, dreigängigem Gewinde, viergängigem Gewinde, fünfgängigem Gewinde oder sechsgängigem Gewinde, zusammenwirkend jeweils mit Umlaufkörpern mit eingängigem Gewinde. "Zweigängiges Gewinde" bedeutet beispielsweise, daß ein betrachteter Gewindegang nach 360° um den Triebkörper herum nicht in den benachbarten Gewindegang einmündet, sondern in den übernächsten Gewindegang. Entsprechendes gilt für Gewinde, die dreigängig, viergängig, usw. sind. Besonders bevorzugt ist die Kombination von Triebkörper mit mehrgängigem Gewinde, entsprechend durchmesserkleineren Umlaufkörpern mit eingängigem Gewinde und ein Innengewinde im Hohlbereich der Abtriebsstange, welches mehrgängig entsprechend der Mehrgängigkeit des Triebkörpergewindes und mit gleicher Gewindesteigungsrichtung wie die Gewinde der Umlaufkörper ausgebildet ist.

Vorzugsweise sind die Umlaufkörper in zwei Ringen gelagert, die relativ zu dem Triebkörper rotierbar sind. Dies hält die Umlaufkörper im gewünschten gegenseitigen Abstand in Umfangsrichtung. Die Ringe sind keine hoch belasteten Bauteile, da - wie bereits angedeutet - die Umlaufkörper praktisch keine Axialkräfte auf ihre Lagerungen geben und sich in Radialrichtung zwischen der Abtriebsstange und dem Triebkörper abstützen.

Da die Umlaufkörper von radial innen her über die Verzahnungen um ihre eigene Achse rotierend angetrieben werden und der Abtrieb auf eine innen mit Rillenprofilierung bzw. Gewinde versehene, hohle Abtriebsstange erfolgt, die eine große axiale Länge im Vergleich zum Triebkörper hat und sich mit ihrem freien Ende außen am Gehäuse des Motors der Linearantriebseinheit abstützt, entsteht eine zweifache Abstützung der Abtriebsstange, nämlich zum einen an der Außenseite des Motorgehäuses und zum anderen an dem Umsetzungstrieb, der von seiner Konstruktion her gute Voraussetzungen zur Aufnahme der Abstützungskräfte aufbringt.

In bevorzugter Ausgestaltung der Erfindung enthält der Raum zwischen dem Gehäuse und dem Hohlbereich der Abtriebsstange ein Schmiermittel, insbesondere Fett, und sind in dem Triebkörper axiale Schmiermittel-Durchtrittskanäle vorgesehen, so daß das Schmiermittel bei den Linearbewegungen der Abtriebsstange von der einen Seite des Triebskörpers zur anderen Seite und zurück gelangen kann. Diese Schmiermittel-Durchtrittskanälekönnen auch durch die Räume zwischen den Umlaufkörpern gebildet sein. Die Schmierung erhöht die Lebensdauer erheblich.

Um die Linearantriebseinheit beidendig bequem an eine Basis bzw. einen linear anzutreibenden Gegenstand anschließen zu können, weist sie günstigerweise an jedem Ende einen Befestigungsbereich bzw. Anschlußbereich auf. Es ist bevorzugt, diese Anschlußbereiche in Form von Befestigungsteilen vorzusehen, die an dem einen Axialende des Gehäuses bzw. an dem dem Gehäuse abgewandten Axialende der Abtriebsstange vorgesehen bzw. angebracht sind. Die Anbringung erfolgt vorzugsweise durch Anschrauben, Anspritzen eines Kunststoffbefestigungsteils oder durch Anbringung mittels eines Konusrings, wobei die letztgenannte, zur Übertragung hoher Kräfte und Drehmomente besonders geeignete Möglichkeit insbesondere an dem einen Axialende des Gehäuse, wo auch Reaktionsdrehmomente zu übertragen sind, besonders bevorzugt ist.

Die möglicherweise sehr erheblichen Axialkräfte der Abtriebsstange, insbesondere in Druckrichtung, müssen von der Linearantriebseinheit aufgenommen werden. Dies geschieht vorzugsweise durch ein Axial-Drucklager zwischen dem Triebkörper und einem axial benachbarten Bauteil der Linearantriebseinheit. Besonders günstig ist hierfür eine kräftige Abschlußwand des Gehäuses, die insbesondere durch Konusringklemmung angebracht sein kann.

Je nach gewünschter Gesamtuntersetzung zwischen dem Motor und der Abtriebsstange sieht man bevorzugt in vielen Fällen ein Untersetzungsgetriebe zwischen dem Motor und dem Triebkörper vor. Besonders geeignet sind einstufige oder mehrstufige Planetenuntersetzungsgetriebe, die wenig Raum einnehmen und platzsparend mehrstufig gebaut werden können. Vorzugsweise ist das Untersetzungsgetriebe in dem Gehäuse untergebracht, das auch den Motor enthält.

Die beschriebene Linearantriebseinheit eignet sich, insbesondere wegen des großen Durchmessers der Abtriebsstange, auch für größere Linearbewegungsstrecken bzw. Hübe. Es ist in Weiterbildung der Erfindung möglich, den Hub auf einfache Weise dadurch besonders groß zu machen, daß man das Gehäuse länger macht als zur Unterbringung des Motors und gegebenenfalls des Untersetzungsgetriebes an sich erforderlich wäre, beispielsweise durch Anbringung eines zylindrischen Gehäuseverlängerungsteils. Auf diese Weise kann man auch Linearantriebseinheiten unterschiedlichen Hubs bequem fertigen, ohne an der Gesamtkonstruktion ansonsten etwas ändern zu müssen.

Es ist bevorzugt, in der Linearantriebseinheit integriert mindestens einen Endschalter vorzusehen, günstig für jede Endposition in jeder Linearbewegungsrichtung einen Endschalter, der durch ein angetrieben linear bewegbares Betätigungsteil betätigbar ist. Eine besonders raumsparende und glückliche Konstruktion hierfür besteht darin, daß mit der den Triebkörper antreibenden Welle eine Übertragungswelle gekoppelt ist, die durch den hohlen Rotor des Motors und gegebenenfalls das Untersetzungsgetriebe zurückgeführt und auf der anderen Axialseite des Motors als Gewindespindel mit einer Wandermutter als Endschalter-Betätigungsteil in Eingriff ist. Da man die Gewindesteigung bei der Paarung von Endschalter-Gewindespindel/Endschalter-Wandermutter anders wählen kann als bei der Paarung von Triebkörper/Abtriebsstange, kann man mit wenig Raum für die Endabschaltung auskommen.

In bevorzugter Ausgestaltung der Erfindung ist die UmfangsRinnenprofilierung bzw. das Gewinde am Innenumfang der Abtriebsstange an mindestens zwei, axial aneinander gesetzten Hülsen vorgesehen, die in einem gemeinsamen, übergeschobenen Rohr festgeschweißt sind. Es wurde nämlich festgestellt, daß Innengewinde größerer Länge bzw. mit größerem Verhältnis von Länge zu Durchmesser relativ schwierig oder teuer herstellbar sind. Deshalb ist bevorzugt, derartige, relativ lange Innengewinde dadurch herzustellen, daß man kürzere, mit Innengewinde versehene Hülsen herstellt, diese Hülsen auf einem spindelartigen, mit Außengewinde versehenen Teil passend mit glattem Gewindeübergang zusammenschraubt, dann ein genau passendes, innen glattes Außenrohr über die Hülsenanordnung schiebt, dann die Hülsen an dem Außenrohr festschweißt und schließlich das spindelartige Innenteil herausschraubt.

Insbesondere im Fall der Ausbildung der Linearantriebseinheit mit Planetenroll-Umsetzungstrieb ist es bevorzugt, den Hohlbereich der Abtriebsstange als mit Innengewinde versehenes Stahlrohr auszubilden. Eine besonders günstige Art der Herstellung des Innengewindes ist das an sich bekannte Gewindewirbeln.

Die Erfindung und Ausgestaltungen der Erfindung werden im folgenden anhand mehrerer, zeichnerisch dargestellter Ausführungsbeispiele noch näher erläutert. Es zeigen:

Fig. 1
eine Linearantriebseinheit im Längsschnitt;
Fig. 2a und 2b
einen Umsetzungstrieb im Längsschnitt und im Querschnitt;
Fig. 3a und 3b
eine erfindungsgemäße Endabschaltung im Längsschnitt und im Querschnitt.

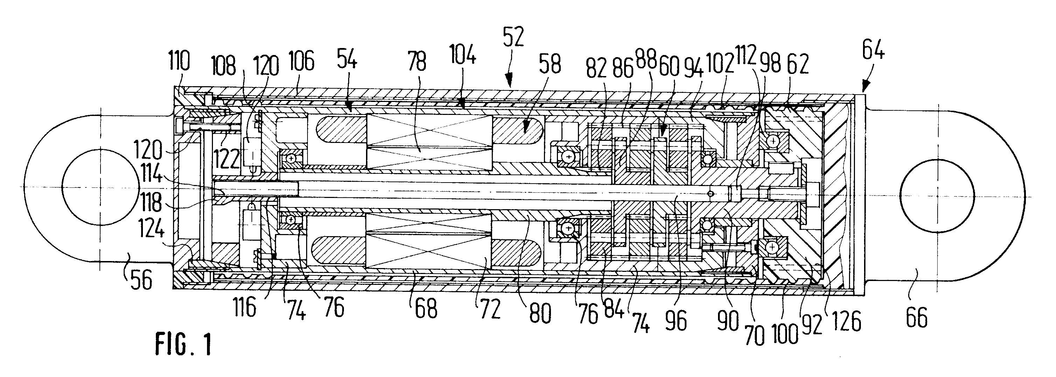

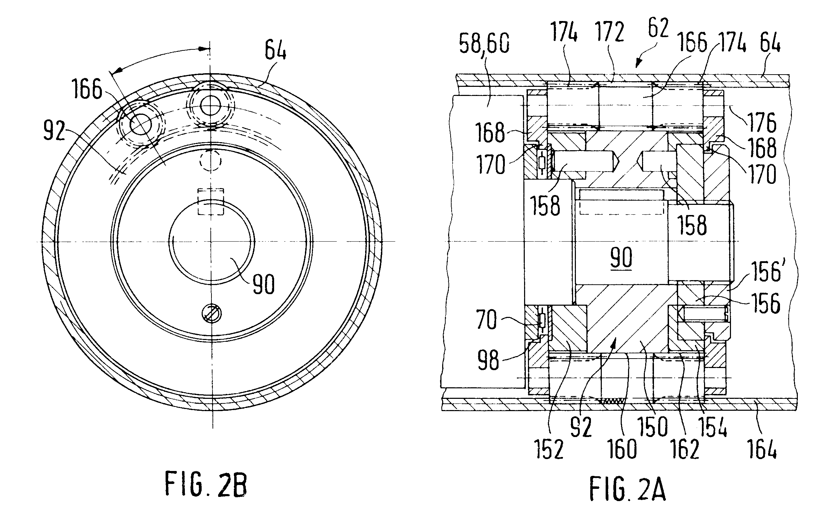

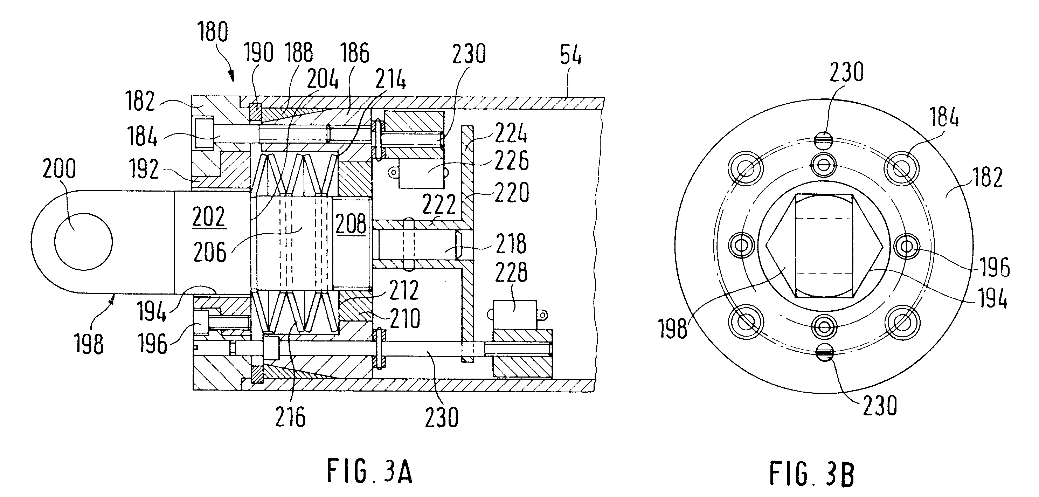

Die Fig 1, 2a, 2b dienen der Erläuterung des Gesamtaufbaus einer Linearantriebseinheit während anhand der Fig 3a, 3b die erfindungsgemäße Abschalteinrichtung erläutert wird. Die in Fig. 1 gezeichnete Linearantriebseinheit 52 besteht im wesentlichen aus einem außenzylindrischen Gehäuse 54 mit links daran befestigtem Befestigungsteil 56 und darin angeordnet einem Elektromotor 58 sowie einem dreistufigen Planeten-Untersetzungsgetriebe 60, aus einem Umsetzungstrieb 62 rechts neben dem Gehäuse 54, und einer Abtriebsstange 64 mit rechts daran befestigtem Befestigungsteil 66.

Das Gehäuse 54 besteht in erster Linie aus einem Rohr 68, an dem links das Befestigungsteil 56 und rechts eine Abschlußwand 70 in nachfolgend noch näher beschriebener Weise befestigt sind. In dem Rohr 68 ist, in der Zeichnung ein Stück links von der Mitte, der Wicklungen aufweisende Stator 72 des Elektromotors 58 befestigt. Links und rechts von dem Stator 72 sind innen in dem Rohr 68 runde Halterungsteile 74 befestigt, die innen jeweils ein Kugellager 76 zur Lagerung des Rotors 78 des Elektromotors 58 aufnehmen. Der Rotor 78 weist eine Hohlwelle 80 auf, deren rechter Endbereich als Ritzel 82 verzahnt ist.

Das Ritzel 82 kämmt mit Planetenrädern 84, die wiederum außen mit einer stillstehenden Hohlradverzahnung 86 kämmen. Die Planetenräder 84 sind rotierbar auf einem seinerseits rotierbaren Planetenradträger 88 gelagert. Der rechte Endbereich dieses Planetenradträgers 88 ist als Ritzel verzahnt. Es schließen sich zwei weitere Planetengetriebestufen an, die analog wie die zuvor beschriebene, erste Planetenstufe aufgebaut sind, wobei jedoch der dritte Planetenradträger nach rechts aus dem Gehäuse 54 herausführend verlängert ist und so eine Antriebswelle 90 für einen Triebkörper bzw. eine Triebscheibe 92 bildet. Die Planetenräder 84 aller drei Planetenstufen kämmen außen mit der Hohlradverzahnung 86, die teils in einem axialen, nach rechts ragenden Fortsatz des rechten Halterungsteils 74 und teils in einem axial anschließenden, weiteren Halterungsteil 94 ausgebildet ist. Der erste und der zweite Planetenradträger sind auf einer weiter unten noch genauer zu beschreibenden Zwischenwelle 96 drehbar gelagert. Der dritte Planetenradträger bzw. die Antriebswelle 90 ist in dem Halterungsteil 94 und der Abschlußwand 70 radial gleitgelagert, wobei ein Axialwälzlager zum Halterungsteil 94 zwischengesetzt ist.

Auf dem rechten Ende der Antriebswelle 90 ist die Triebscheibe 92 drehfest und axial gehalten angeordnet. Die Triebscheibe 92 befindet sich axial rechts benachbart der Abschlußwand 70 und stützt sich mittels eines Axialkugellagers 98 gegen die Abschlußwand 70 ab. Der Außendurchmesser der Triebscheibe 92 ist etwas größer als der Außendurchmesser des Rohrs 68 und weist dort ein Gewinde 100 mit halbkreisförmig-konvexem Gewindegangprofil auf. Das Außengewinde 100 der Triebscheibe 92 kämmt mit einem passenden Innengewinde 102 am Innenumfang eines Hohlbereichs 104 der Abtriebsstange 64. Das Innengewinde 102 erstreckt sich nahezu über die gesamt Länge des Hohlbereichs 104, und der Hohlbereich 104 nimmt, beginnend von links, nahezu die gesamte Länge der Abtriebsstange 64 ein. Rechts schließt sich lediglich noch das Befestigungsteil 66 an. Das Innengewinde 102 ist dadurch hergestellt, daß in ein innen mit einem Feingewinde versehenes Stahlrohr 106 im wesentlichen hohlzylindrisch Kunststoff 108 innen, gleich mit der Formgebung des Innengewindes 102, eingespritzt worden ist. Das beschriebene Feingewinde hält das Kunststoffteil 108, insbesondere axial. Als zusätzliche Sicherung könnten noch radiale Madenschrauben oder Stifte vorgesehen sein. Am linken Ende des Hohlbereichs 104 ist ein Kunststoffring 110 eingeschraubt und gesichert, der mit seinem Innendurchmesser auf dem Außenumfang des Gehäuserohrs 68 in Axialrichtung gleiten kann. Der Ring 110 kann erforderlichenfalls innen eine gesonderte Dichtung aufweisen.

In dem gezeichneten, ganz zusammengefahrenen Zustand der Linearantriebseinheit 52 befindet sich der Ring 110 etwa am linken Ende des Gehäuses 54. Die Abtriebsstange 64 kann relativ zu dem Gehäuse 54 herausgefahren werden, bis der Ring 110 bis dicht an die Triebscheibe 92 gewandert ist. Somit ist der Hub der Linearantriebseinheit 52 nur wenig kleiner als die Länge des Stahlrohrs 106.

Die bereits kurz angesprochene Zwischenwelle 96 ist mit ihrem rechten Endbereich in einer entsprechenden, nach links offenen, zentralen Sackbohrung 112 der Antriebswelle 90 aufgenommen und drehfest festgelegt. Die Zwischenwelle 96 erstreckt sich nach links durch das Untersetzungsgetriebe 60 und die Hohlwelle 80 des Elektromotors 58. Der linke Endbereich der Zwischenwelle 96 ist mit einem Gewinde 114 versehen, auf dem eine Wandermutter 116 bei Drehung der Zwischenwelle 96 axial wandert. Die Wandermutter 116 ist in dem linken Halterungsteil 74 drehfest aber axial verschieblich abgestützt. Die Wandermutter 116 weist außen zwei Schaltnocken 118 auf, die jeweils mit einem an dem linken Halterungsteil 74 befestigten Endschalter 120 zusammenwirken. Auf diese Weise wird der Elektromotor 58 sowohl bei Erreichung des gänzlich zusammengefahrenen Zustands als auch bei Erreichung des gänzlich auseinandergefahrenen Zustands der Linearantriebseinheit 52 abgeschaltet.

Das linke Befestigungsteil 56 in Gestalt eines Befestigungsauges ist dadurch am linken Ende des Gehäuses 54 befestigt, daß von außen her in Axialrichtung Schrauben 120 in einen außenkonischen Innenring 122 geschraubt sind und daß zwischen dem Innenring 122 und dem Befestigungsteil 56 ein innen komplementär konischer, geschlitzter Zwischenring 124 zwischengeschaltet ist, der durch Anziehen der Schrauben 120 radial nach außen gegen den Endbereich des Rohrs 68 gedrückt wird. Kräfte in Abziehrichtung des Befestigungsteils 56 führen infolgedessen zu einer Erhöhung der Klemmkraft des Zwischenrings 124 im Gehäuserohr 68. Am rechten Ende des Gehäuses 54 ist die Abschlußwand 70 in ganz analoger Weise an dem Gehäuserohr 68 befestigt, wobei das weitere Halterungsteil 94 als Innenring für die Schrauben dient.

Das rechte Befestigungsteil 66 könnte man in analoger Weise rechts am Stahlrohr 106 der Abtriebsstange 64 befestigen. Es ist jedoch eine Alternative gezeichnet, bei der das Befestigungsteil 66 an den rechten Endbereich des Stahlrohrs 106 angespritzt ist, und zwar einstückig mit dem Kunststoff-Gewindeteil 108. Das rechte Befestigungsteil 66 besteht also aus Kunststoff, wobei ein metallischer Zugankerbügel mit eingespritzt sein kann.

Ferner erkennt man in der Triebscheibe 92 axial durchgehende Durchtrittskanäle 126. Zwischen dem Innenumfang des Kunststoff-Gewindeteils 108 und dem Außenumfang des Gehäuserohrs 68 besteht ein Raum, der Fett enthält. Wenn die Abtriebsstange 64, ausgehend von dem gezeichneten Zustand, nach rechts ausgefahren wird, verkleinert sich dieser Raum wegen Verkürzung der axialen Länge, und enthaltenes Fett kann durch die Durchtrittskanäle 126 auf den sich gleichzeitig vergrößernden Raum rechts von der Triebscheibe 92 und innerhalb des Hohlraums 104 der Abtriebsstange 64 gelangen. Beim Zusammenfahren der Linearantriebseinheit 52 erfolgt diese Fettverdrängung in umgekehrter Richtung. Die Triebscheibe 92 hat eine auf die mögliche Linearkraft der Linearantriebseinheit 52 abgestimmte, axiale Breite.

Wenn der Elektromotor 58 eingeschaltet wird, treibt seine Rotorwelle 80 in das dreistufige Planeten-Untersetzungsgetriebe 60. Von dort erfolgt der drehende Kraftfluß über die Antriebswelle 90 zur rotierende Triebscheibe 92, die sich mit wesentlich geringerer Drehzahl als der Elektromotor 58 dreht. Am Eingriff der Gewinde 100 und 102 erfolgt die Umsetzung von der rotierenden Bewegung der Triebscheibe 92 in die lineare Bewegung der Abtriebsstange 64. Der Hohlbereich 104 der Abtriebsstange 64 hat einen großen Durchmesser und greift mit einem - vom Ausmaß des Auseinanderfahrens der Linearantriebseinheit 52 abhängigen - Teil seiner Länge über das Gehäuse 54 und stützt sich an seinem offenen Ende auf dem Außenumfang des Gehäuses 54 ab.

Wenn man eine Linearantriebseinheit 52 mit größerem Hub wünscht, kann man das Gehäuserohr 68 durch axiales Ansetzen eines Gehäuseverlängerungsrohrs verlängern, beispielsweise mittels eines Schraubzwischenrings, wobei das Befestigungsteil 56 selbstverständlich dann am freien Ende des Gehäuseverlängerungsrohrs anzubringen ist. Der Hohlbereich 104 der Abtriebsstange 64 kann dann entsprechend länger sein.

In Figur 1 war ein besonders unkomplizierter Umsetzungstrieb 62 gezeichnet worden. Figuren 2a und 2b zeigen einen bevorzugten, komplizierter aufgebauten Umsetzungstrieb, den man sich an die Stelle des in Figur 1 eingezeichneten Umsetzungstriebs gesetzt vorstellen kann. Elektromotor 58 und Untersetzungsgetriebe 60 sind nur schematisch angedeutet. Die aus dem Untersetzungsgetriebe 60 herausgeführte Antriebswelle 90 trägt drehfest einen Triebkörper 92, der im wesentlichen aus einem Mittelteil 150, einem axial links vorgesetzten Ring 152 und einem axial rechts vorgesetzten Ring 154 besteht. Das Mittelteil 150 und der rechte Ring 154 sind durch eine auf das Ende der Antriebswelle 90 geschraubte Mutter 156 nach links gegen eine Schulter der Antriebswelle 90 gespannt. Der linke Ring 152 stützt sich nach links gegen das Axiallager 98 ab, das sich seinerseits nach links gegen die Abschlußwand 70 abstützt. Durch axiale Stifte 158 sind die Teile 150, 152, 154 gegen gegenseitiges Verdrehen gesichert.

Der Außenumfang des Mittelteils 150 ist mit einer Rinnenprofilierung 160 in Form eines sechsgängigen Linksgewindes versehen. Die beiden Ringe 152, 154 sind an ihrem Außenumfang mit einer stirnradartigen Verzahnung 162 versehen, wobei der Teilkreis des Gewindes 160 und die Teilkreise der Verzahnungen 162 miteinander übereinstimmen.

Zwischen einer Innenprofilierung 164 in Form eines sechsgängigen Rechtsgewindes des Hohlbereichs der Abtriebsstange 64 und den Triebkörper 150 sind längs eines kreisförmigen Umfangs verteilt insgesamt zwölf Umlaufkörper 166 angeordnet, die jeweils mit ihren axialen Enden in zwei Ringen 168 gelagert sind. Die Ringe 168 haben jeweils einen kreisförmigen Innenvorsprung 170, der zur axialen Lagefixierung der Ringe 168 zwischen den Lagerringen des Axiallagers 98 bzw. in einer kreisförmigen Außennut zwischen der Mutter 156 und einer weiteren, vorgeschraubten Mutter 156', die beide jeweils außen rund sind, läuft. Die Umlaufkörper 166 sind am Außenumfang jeweils für die gesamte axiale Länge mit einer Rinnenprofilierung 172 in Form eines eingängigen Rechtsgewindes versehen. Die Umlaufkörper 166 sind jeweils in ihren beiden axialen Endbereichen mit einer stirnradartigen Verzahnung 174 versehen, die einfach zusätzlich zu dem Gewinde eingearbeitet ist. Die Teilkreise des Gewindes 172 und der Verzahnungen 174 stimmen überein. Die Verzahnungen 174 kämmen mit den Verzahnungen 162 der Ringe 152, 154. Radial außen ist das Gewinde 172 mit dem Gewinde 164 der Abtriebsstange 64 in Eingriff. Radial innen ist der mittlere Bereich des Gewindes 172 mit dem Gewinde 160 des Mittelteils 150 in Eingriff. Die Umlaufkörper 166 haben einen Teilkreisdurchmesser, der ein Sechstel des Teilkreisdurchmessers des Triebkörpers 92 beträgt. Somit drehen sich bei Drehung des Triebkörpers 92 die Umlaufkörper 166 mit einer Drehzahl um die eigene Achse 176, die das Sechsfache der Drehzahl des Triebkörpers 92 beträgt. Da zwischen den Umlaufkörpern 166 und dem Triebkörper 92 ein Eingriff zwischen einem eingängigen Rechtsgewinde und einem sechsgängigen Linksgewinde besteht, bleiben die Umlaufkörper 166 bei Drehung des Triebkörpers 92 und Drehung der Umlaufkörper 166 um ihre eigene Achse und Herumwandern der Achsen 176 der Umlaufkörper 166 sozusagen als Planeten um den Triebkörper 92 axial an ihrer Stelle. Infolge der Drehung der Umlaufkörper 166 wird auf die Abtriebsstange 64 eine axiale Linearantriebskraft ausgeübt. Alle gegenseitigen Eingriffe zwischen dem Triebkörper 92, den Umlaufkörpern 166 und dem Gewinde 164 der Abtriebsstange 64 sind abrollender statt gleitender Natur und finden im wesentlichen punktförmig bzw. bei den Verzahnungen linienförmig statt. Die axiale Breite des Triebkörpers 92 und der Umlaufkörper 166 kann auf die auftretenden Belastungen abgestellt werden.

Figuren 3a und 3b zeigen eine kraftabhängige Abschaltung 180 einer Linearantriebseinheit, die man sich eingebaut am axial linken Ende der in Figur 1 dargestellten Linearantriebseinheit vorstellen kann, und zwar zusätzlich zu oder statt der dort vorhandenen, positionsabhängigen Endabschaltung.

Von einer kreisförmigen Abschlußwand 182 des Gehäuses 54 führen vier umfangsmäßig verteilte, axiale Schrauben 184 in einen außenkonischen Innenring 186. Ein innen komplimentär konischer, geschlitzter Zwischenring 188 ist links stirnseitig durch einen Seeger-Ring 190 im Gehäuse 54 nach links gehalten. Durch Anziehen der Schrauben 184 wird der Zwischenring 188 nach außen gedrückt und zwischen dem Innenring 186 und dem Gehäuse 54 mit hoher Vorspannung festgeklemmt. In die Abschlußwand 182 ist im inneren Bereich eine Büchse 192 aus Bronze eingesetzt, die eine sechseckigen, durchgehende Öffnung 194 in ihrem Zentrum aufweist. Die Büchse 192 ist durch axiale Schrauben 196 an der Abschlußwand 182 befestigt.

Ein Befestigungsteil 198, das in seinem axial linken Endbereich ein Anschlußauge 200 aufweist, hat rechts von dem Anschlußauge einen Bereich 202 mit sechseckigem Querschnitt, der passend durch die sechseckige Öffnung 194 der Büchse 192 geführt ist. Daran schließt sich rechts mit einer Schulter 204 ein zylindrischer Bereich 206 des Befestigungsteils 198 mit etwas kleinerem Außendurchmesser an. Rechts davon schließt sich ein Gewindebereich 208 an, auf den eine außen runde Mutter 210 aufgeschraubt ist. Der runde Außenumfang der Mutter 210 ist in einer entsprechenden Innenbohrung des Zwischenrings 186 gleitend aufgenommen. Der Zwischenring 186 weist an seinem Innenumfang eine nach links weisende Schulter 214 auf.

Es ist eine Federeinheit 216 in Form eines vorgespannten Tellerfederpakets vorgesehen, die sich im gezeichneten Ruhezustand der Lineareinheit rechts radial außen an der Schulter 214 des Zwischenrings 186, rechts radial weiter innen an der linken Stirnfläche 212 der Mutter 210, links radial innen an der Schulter 204 des Befestigungsteils 198 und links radial weiter außen an der Büchse 192 abstützt. Somit bilden die Elemente 204 und 212 Schultern des Befestigungsteils 198 und die Elemente 214 und 192 dem Gehäuse 54 zugeordnete Widerlager.

Auf einem zylindrischen, axial nach rechts ragenden Fortsatz 218 des Befestigungsteils 198 ist ein Betätigungsteil 220 befestigt, das einen nach links ragenden, hohlzylindrischen Fortsatz 222 zur Befestigung auf dem Fortsatz 218 hat und rechts davon im wesentlichen die Gestalt einer aufrecht stehenden Rechteckplatte hat, deren Ebene rechtwinklig zur Längsachse des Befestigungsteils 198 und der Linearantriebseinheit ist. Ein Stück links von der Platte 224 befindet sich ein erster Mikroschalter 226, und ein Stück rechts von der Platte 224 befindet sich ein zweiter Mikroschalter 228. Die axialen Positionen der Mikroschalter 226, 228 können durch Einstellspindeln 230, die axial durch den Zwischenring 186 und die Abschlußwand 182 nach außen führen, eingestellt werden.

Wenn die Linearantriebseinheit Zugkräfte liefert, die somit das Befestigungsteil 198 nach links aus dem Gehäuse 54 herauszuziehen versuchen, drückt sich die Federeinheit 216 zwischen der Mutter 210 und der Büchse 192 zusammen, wobei der sechseckige Bereich 202 des Befestigungsteils 198 in der Öffnung 194 axial wandert und der Außenumfang der Mutter 210 in der entsprechenden Bohrung des Zwischenrings 186 axial wandert. Wenn diese Zusammendrückung einen vorbestimmten Wert erreicht hat, gelangt die Platte 224 des Betätigungsteils 220 gegen den ersten Mikroschalter 226 und schaltet den Antriebsmotor 58 der Linearantriebseinheit ab.

Wenn hingegen die Linearantriebseinheit Druckkräfte liefert, die somit das Befestigungsteil 198 in Figur 4 nach rechts zu verschieben trachten, wird die Federeinheit 216 zwischen der Schulter 204 des Befestigungsteils 198 und der Schulter 214 des Zwischenrings 186 zunehmend zusammengedrückt, wobei wiederum der sechseckige Bereich 202 und die Mutter 210 axial wandern, wie vorstehend beschrieben, allerdings nach rechts. Wenn diese Verschiebung einen vorbestimmten Wert erreicht hat, gelangt die rechte Oberfläche der Platte 224 gegen den zweiten Mikroschalter 228, wodurch der Antriebsmotor 58 der Linearantriebseinheit abgeschaltet wird.

Die Verdrehung der Muttern 156 (Figur 2) und 210 kann beispielsweise mit Hilfe eines Werkzeugs erfolgen, das in stirnseitige, axiale, nicht eingezeichnete Bohrungen der jeweiligen Mutter greift.

Es wird darauf hingewiesen, daß dann, wenn die Linearantriebseinheit 52 hohe Linearkräfte liefert, die Verbindungen zwischen dem Haltering 94 und dem Gehäuse 54 sowie zwischen dem linken Befestigungsteil 56 und dem Gehäuse 54 hohe Belastungen übertragen müssen, und zwar nicht nur in Zugrichtung und in Druckrichtung, sondern auch in Form von Reaktionsdrehmomenten, da das Gehäuse 54 die Hohlverzahnung des Planeten-Untersetzungsgetriebes 60 trägt. Insbesondere an diesen Stellen stellen die beschriebenen Konusringklemmungen eine besondere geeignete Verbindungsart dar. Ähnliches gilt für die Befestigung der Abschlußwand 182 an dem Gehäuse 54 (vgl. Figur 3), da das Befestigungsteil 198 über die Sechskantöffnung 194 und den Sechskantabschnitt 202 verdrehfest im Gehäuse 54 gehalten ist bzw. das mit seinem Befestigungsauge 200 an einem äußeren Teil befestigte Befestigungsteil 198 über den Sechskantabschnitt 202 und die Sechskantöffnung 194 und die beschriebene Konusringklemmung das gesamte Gehäuse 54 gegen Verdrehen um dessen Längsachse festlegt.

## Patentansprüche

1. Linearantriebseinheit (52), mit:
    (a) einem Gehäuse (54) in dem ein Antriebsmotor (58) untergebracht ist;
    (b) einer linear antreibbaren Abtriebsstange (64);
    (c) einem mit dem Motor (58) und der Abtriebsstange (64) in Antriebsverbindung stehenden Umsetzungstrieb (62), der Rotationsbewegung in Linearbewegung der Abtriebsstange (64) umsetzt; und
    (d) einer Einrichtung zum Abschalten des Antriebsmotors (58) bei Überschreiten einer von der Linearantriebseinheit (52) gelieferten, vorbestimmten Axialkraft, wobei eine Relativbewegung zweier Bauteile gegen die Federkraft einer Federeinheit (216) stattfindet, dadurch gekennzeichnet,
    (e) daß an dem der Abtriebsstange (64) entgegengesetzten Axialende des Gehäuses (54) ein die Axialkraft der Linearantriebseinheit (52) ableitendes Befestigungsteil (198) vorgesehen ist, das relativ zu dem Gehäuse (54) undrehbar gehalten ist und durch eine Stirnwandöffnung (194) axial verschiebbar in das Gehäuse (54) geführt ist;
    (f) daß die Federeinheit (216) zwischen einer an dem Befestigungsteil (198) gebildeten Schulter (212; 204) und einem Widerlager (192;214) in dem Gehäuse (54) vorgesehen ist;
    (g) daß das Befestigungsteil (198) mit einem Betätigungsteil (220) versehen ist, das mindestens einen Schalter (226; 228) bei Überschreiten der vorbestimmten Axialkraft und daraus resultierender, genügend großer Verschiebung des Befestigungsteils (198) in der Stirnwandöffnung (194) betätigt.

2. Linearantriebseinheit nach Anspruch 1, dadurch gekennzeichnet, daß für beide Axial-Ausweichbewegungsrichtungen des Befestigungsteils (198) eine Federeinheit (216) vorgesehen ist, die sich auf der der Schulter (212) entgegengesetzten Seite radial innen gegen eine weitere Schulter (204) des Befestigungsteils (198) und radial weiter außen gegen das Widerlager (192) abstützt und sich radial außerhalb der ersten Schulter (212) gegen ein weiteres Widerlager (214) abstützt.

3. Linearantriebseinheit nach Anspruch 1 oder 2, gekennzeichnet durch folgende Merkmale:
    a) die Abtriebsstange (64) weist einen Hohlbereich (104) auf, der zum Teil über das Gehäuse (54) greift und sich am Außenumfang des Gehäuses (54) axial verschiebbar abstützt;
    b) der Umsetzungstrieb (62) weist einen rotierend von dem Motor (58) antreibbaren Triebkörper (92) auf;

c) ein Außengewinde (100) des Triebkörpers (92) ist in Eingriff mit einem Innengewinde (102) im Hohlbereich (104) der Abtriebsstange (64).

4. Linearantriebseinheit nach Anspruch 1 oder 2, gekennzeichnet durch folgende Merkmale:

(a) die Abtriebsstange (64 ) weist einen Hohlbereich (104) auf, der zum Teil über das Gehäuse (54 ) greift und sich am Außenumfang des Gehäuses ( 54 ) axial verschiebbar abstützt;

(b) dem Umsetzungstrieb ( 62 ) gehört ein rotierend von dem Motor (58) antreibbarer Triebkörper ( 92 ) an, der an seinem Außenumfang eine Umfangs-Rinnenprofilierung (160) sowie eine Verzahnung (162) aufweist;

(c) mehreren, sich axial erstreckenden, um die eigene Achse rotierbaren Umlaufkörpern ( 166), die jeweils eine Umfangs-Rinnenprofilierung (172) sowie eine Verzahnung (174) aufweisen;

(d) Eingriff der Rinnenprofilierungen (172) der Umlaufkörper ( 166) radial innen mit der Rinnenprofilierung (160) des Triebkörpers ( 92 ) und radial außen mit einer Umfangs-Rinnenprofilierung (164) am Innenumfang des Hohlbereichs (104) der Abtriebsstange ( 64 ) sowie Eingriff der Verzahnungen ( 174 ) der Umlaufkörper (166) mit der Verzahnung ( 162) des Triebkörpers ( 92 );

(e) einer Ausbildung der Rinnenprofilierungen (150, 172, 164) des Triebkörpers ( 92 ), der Umlaufkörper (166) und des Abtriebsstangen-Hohlbereichs (104) derart, daß bei Rotation dieser Teile zwischen dem Triebkörper ( 92 ) und den Umlaufkörpern (166) keine axiale Relativbewegung stattfindet und die Abtriebsstange ( 64 ) eine axiale Relativbewegung gegenüber den Umlaufkörpern (166) ausführt.

5. Linearantriebseinheit nach Anspruch 4, dadurch gekennzeichnet, daß die Rinnenprofilierungen (150,172 ) des Triebkörpers ( 92 ) und der Umlaufkörper (166) als Gewinde ausgebildet sind, wobei die Gewindesteigungsrichtung der Umlaufkörper (166) entgegengesetzt der Gewindesteigungsrichtung des Triebkörpers ( 92 ) ist.

6. Linearantriebseinheit nach Anspruch 5, dadurch gekennzeichnet, daß der Gewinde-Teilkreisdurchmesser sowie der Verzahnungs-Teilkreisdurchmesser des Triebkörpers (92 ) ein n-faches des jeweiligen Gewinde-Teilkreisdurchmessers sowie des jeweiligen Verzahnungs-Teilkreisdurchmessers der Umlaufkörper (166) beträgt; und daß das jeweilige Gewinde der Umlaufkörper (166) eingängig und das Gewinde des Triebkörpers (92 ) n-gängig ist; wobei n eine ganze Zahl 1, 2, 3, ... ist.

7. Linearantriebseinheit nach einem der Ansprüche 4 bis 6, dadurch gekennzeichnet, daß die Umlaufkörper (166) in zwei Ringen (168) gelagert sind, die relativ zu dem Triebkörper ( 92 ) rotierbar sind.

8. Linearantriebseinheit nach einem der Ansprüche 3 bis 7, dadurch gekennzeichnet, daß der Raum zwischen dem Gehäuse (54) und dem Hohlbereich (104) der Abtriebsstange (64) Schmiermittel enthält und daß in dem Triebkörper (92) axiale Schmiermittel-Durchtrittskanäle (126) vorgesehen sind.

9. Linearantriebseinheit nach einem der Ansprüche 1 bis 8, dadurch gekennzeichnet, daß eine Abschlußwand (182) des Gehäuses (54), durch die das Befestigungsteil (198) geführt ist, durch Konusringklemmung (186, 188) an dem Gehäuse (54) befestigt ist.

10. Linearantriebseinheit nach einem der Ansprüche 1 bis 9, dadurch gekennzeichnet, daß an dem dem Gehäuse (54) abgewandten Axialende ein weiteres Befestigungsteil (66) an der Abtriebsstange (64) vorgesehen ist, vorzugsweise durch Anschrauben, Anspritzen oder durch Konusringklemmung.

11. Linearantriebseinheit nach einem der Ansprüche 1 bis 10, dadurch gekennzeichnet, daß an dem dem Befestigungsteil (198) entgegen gesetzten Axialende eine Abschlußwand (70) an dem Gehäuse (54) vorgesehen ist, vorzugsweise durch Konusringklemmung, und daß vorzugsweise zwischen der Abschlußwand (70) und dem Triebkörper (92) des Umsetzungstriebs (62) ein Axiallager (98) vorgesehen ist.

12. Linearantriebseinheit nach einem der Ansprüche 3 bis 11, dadurch gekennzeichnet, daS zwischen dem Motor (58) und dem Triebkörper ein Untersetzungsgetriebe vorgesehen ist, vorzugsweise ein einstufiges oder mehrstufiges Planetenuntersetzungsgetriebe ( 60).

13. Linearantriebseinheit nach Anspruch 12, dadurch gekennzeichnet, daß das Untersetzungsgetriebe ( 60 ) in dem Gehäuse ( 54 ) untergebracht ist.

14. Linearantriebseinheit nach einem der Ansprüche 3 bis 13, dadurch gekennzeichnet, daS das Gehäuse (54) auf der dem Triebkörper (92) abgewandten Seite länger ist als zur Unterbringung des Motors (58) und gegebenenfalls des Getriebes (60) erforderlich, vorzugsweise durch Anbringung eines Gehäuseverlängerungsteils.

15. Linearantriebseinheit nach einem der Ansprüche 1 bis 14, gekennzeichnet durch mindestens einen, durch ein angetrieben linear bewegbares Betätigungsteil (116) betätigbaren Endschalter (120).

16. Linearantriebseinheit nach Anspruch 15, dadurch gekennzeichnet, daß mit der den Triebkörper (92) antreibenden Welle (90) eine Übertragungswelle gekoppelt ist, die durch den hohlen Rotor (78) des Motors (58) und gegebenenfalls das Untersetzungsgetriebe (60) führt und auf der anderen Axialseite des Motors (58) als Gewindespindel (96) mit einer Wandermutter (116) als Endschalter-Betätigungsteil in Eingriff ist.

17. Linearantriebseinheit nach einem der Ansprüche 3 bis 16, dadurch gekennzeichnet, daß das Innengewinde (102) oder die Umfangs-Rinnenprofilierung (164) am Innenumfang der Abtriebsstange (64) an mindestens zwei, axial aneinandergesetzten Hülsen vorgesehen ist, die in einem gemeinsamen, übergeschobenen Rohr festgeschweißt sind.

**Claims**

1. A linear drive unit (52), comprising:
   (a) a housing (54) in which a driving motor (58) is accommodated;
   (b) a driven rod (64) adapted to be driven in linear manner;
   (c) a conversion drive (62) which is in driving connection with the motor (58) and the driven rod (64) and converts rotational movement into linear movement of the driven rod (64); and
   (d) a means for switching off the driving motor (58) when a predetermined axial force supplied by the linear drive unit (52) is exceeded, with a relative movement of two component parts taking place against the spring force of a spring unit (216), characterized in
   (e) that a mounting part (198) is provided on the axial end of the housing (54) opposite the driven rod (64), said mounting part leading off the axial force of the linear drive unit (52) and being held unrotatably relative to the housing (54) and being passed in axially slidable manner through an end wall opening (194) into the housing (54);
   (f) that the spring unit (216) is provided between a shoulder (212; 204) formed on the mounting part (198) and an abutment (192; 214) in the housing (54);
   (g) that the mounting part (198) is provided with an actuation member (220) actuating at least one switch (226; 228) when the predetermined axial force is exceeded and when, resulting therefrom, a sufficiently great displacement of the mounting part (198) in the end wall opening (194) takes place.

2. A linear drive unit according to claim 1, characterized in that, for both axial directions of deflection movement of the mounting part (198), there is provided a spring unit (216) which is supported on the side opposite the shoulder (212), at a radially inner location against an additional shoulder (204) of the mounting part (198) and at a radially further outer location against the abutment (192), and at a location radially outside of the first shoulder (212) against an additional abutment (214).

3. A linear drive unit according to claim 1 or 2, characterized by the following features:
   a) the driven rod (64) has a hollow portion (104) which partly extends over the housing (54) and is supported on the outer circumference of the housing (54) in axially slidable manner;
   b) the conversion drive (54) has a drive body (92) adapted to be driven by the motor (58) in rotating manner;
   c) an external thread (100) of the drive body (92) is in engagement with an internal thread (102) in the hollow portion (104) of the driven rod (64).

4. A linear drive unit according to claim 1 or 2, characterized by the following features:
   (a) the driven rod (64) has a hollow portion (104) which partly extends over the housing (58) and is supported on the outer circumference of the housing (54) in axially slidable manner;

(b) a drive body (92) belongs to the conversion drive (62), which is adapted to be driven by the motor (58) in rotating manner and is provided on its outer circumference with a circumferential groove profile (160) and with teeth (162);

(c) a plurality of axially extending revolving members (166) which are rotatable about their own axes and each have a circumferential groove profile (172) as well as teeth (174);

(d) engagement of the groove profiles (172) of the revolving members (166) at a radially inner location with the groove profile (160) of the drive body (92) and at a radially outer location with a circumferential groove profile (164) on the inner circumference of the hollow portion (104) of the driven rod (64), as well as engagement of the teeth (174) of the revolving members (166) with the teeth (162) of the drive body (92);

(e) a design of the groove profiles (150, 172, 164) of the drive body (92), the revolving members (166) and the hollow portion (104) of the driven rod in such a manner that, during rotation of these parts, there is no axial relative movement between the drive body (92) and the revolving members (166) and the driven rod (64) carries out an axial relative movement with respect to the revolving members (166).

5. A linear drive unit according to claim 4, characterized in that the groove profiles (150, 172) of the drive body (92) and of the revolving members (166) are designed as threads, with the thread direction of the revolving members (166) being opposite to the thread direction of the drive body (92).

6. A linear drive unit according to claim 5, characterized in that the thread pitch diameter and the teeth pitch diameter of the drive body (92) are n-times the particular thread pitch diameter and the particular teeth pitch diameter of the revolving members (166); and in that the particular thread of the revolving members (166) is a single-start thread and the thread of the drive body (92) is an n-start thread; with n being an integer 1, 2, 3 ..... .

7. A linear drive unit according to any one of claims 4 to 6, characterized in that the revolving members (166) are supported in two rings (168) which are rotatable relative to the drive body (92).

8. A linear drive unit according to any one of claims 3 to 7, characterized in that the space between the housing (54) and the hollow portion (104) of the driven rod (64) contains lubricant, and in that axial lubricant passageways (126) are provided in the drive body (92).

9. A linear drive unit according to any one of claims 1 to 8, characterized in that a closure wall (182) of the housing (54), through which the mounting part (198) is passed, is mounted to the housing (54) by taper ring clamping (186, 188).

10. A linear drive unit according to any one of claims 1 to 9, characterized in that on the axial end facing away from the housing (54), there is provided an additional mounting part (66) on the driven rod (64), which is attached preferably by screw-type engagement, injection molding or taper ring clamping.

11. A linear drive unit according to any one of claims 1 to 10, characterized in that on the axial end opposite the mounting part (198) there is provided a closure wall (70) on the housing (54), preferably by taper ring clamping, and in that preferably an axial bearing (98) is provided between the closure wall (70) and the drive body (92) of the conversion drive (62).

12. A linear drive unit according to any one of claims 3 to 11, characterized in that a step-down gear means is provided between the motor (58) and the drive body, preferably a one-stage or a multi-stage planetary step-down gear means (60).

13. A linear drive unit according to claim 12, characterized in that the step-down gear means (60) is accommodated in the housing (54).

14. A linear drive unit according to any one of claims 3 to 13, characterized in that the housing (54) is longer on the side facing away from the drive body (92) than is necessary for accommodation of the motor (58) and, optionally, of the gear means (60), preferably by attachment of a housing extension part.

15. A linear drive unit according to any one of claims 1 to 14, characterized by at least one limit switch (120) adapted to be actuated by an actuation member (116) movable in linearly driven manner.

16. A linear drive unti according to claim 15, characterized in that the shaft (90) driving the drive body (92) has a transmission shaft coupled therewith which extends through the hollow rotor (78) of the motor (58) and, optionally, through the step-down gear means (60) and which, on the other axial side of the motor (58), is in engagement, in the form of a threaded spindle (96), with a travelling nut (116) forming a limit switch actuation member.

17. A linear drive unit according to any one of claims 3 to 16, characterized in that the internal thread (102) or the circumferential groove profile (164) on the internal circumference of the driven rod (64) is provided on at least two sleeves which are axially placed against each other and welded in a common tube slid thereonto.

**Revendications**

1. Unité d'entraînement linéaire (52), comprenant :

    (a) un carter (54) dans lequel est logé un moteur d'entraînement (58);
    (b) une tige entraînée (64), pouvant être entraînée linéairement;
    (c) une transmission de conversion (62), placée en relation d'entraînement avec le moteur (58) et la tige entraînée (64), qui convertit le mouvement de rotation en mouvement linéaire de la tige entraînée (64); et
    (d) un dispositif pour déconnecter le moteur d'entraînement (58) en cas de dépassement d'une force axiale prédéterminée, fournie par l'unité d'entraînement linéaire (52), un mouvement relatif de deux composants ayant lieu à l'encontre de la force élastique d'une unité à ressort (216),
    caractérisée en ce que
    (e) à l'extrémité axiale, opposée à la tige entraînée (64) du carter (54) est prévu une partie de fixation (198) qui détourne la force axiale de l'unité d'entraînement linéaire (52) et est maintenue bloquée en rotation par rapport au carter (54) et guidée dans le carter (54) de façon à pouvoir se déplacer axialement, à travers une ouverture (194) de paroi frontale ;
    (f) l'unité à ressort (216) est prévue dans le carter (54), entre un épaulement (212;204) formé sur la partie de fixation (198) et une butée (192;214);
    (g) la partie de fixation (198) est pourvue d'une pièce d'actionnement (20) qui actionne au moins un interrupteur (226;228) en cas de dépassement de la force axiale prédéterminée et en conséquence d'un déplacement suffisamment grand de la partie de fixation (198) dans l'ouverture (194) de paroi frontale.

2. Unité d'entraînement linéaire selon la revendication 1, caractérisée en ce que, pour les deux sens de déplacement d'écart axial de la partie de fixation (198) est prévue une unité à ressort (216) qui, du côté opposé à l'épaulement (212), prend appui, l'intérieur, radialement à l'intérieur sur un autre épaulement (204) de la partie de fixation (198) et prend appui, radialement plus à l'extérieur, contre la butée (192), et prend appui, radialement à l'extérieur du premier épaulement (212), contre une autre butée (214).

3. Unité d'entraînement linéaire selon la revendication 1 ou 2, caractérisée par les propriétés suivantes :
    a) la tige entraînée (64) présente une zone creuse (104), qui s'étend en partie sur le carter (54) et prend appui, en périphérie extérieure du carter (54), de façon à pouvoir se déplacer axialement;
    b) la transmission de conversion (62) présente un élément d'entraînement (92), pouvant être entraîné en rotation par le moteur (58);
    c) un filetage extérieur (100) de l'élément d'entraînement (92) est en prise par son filet extérieur (102) dans la zone creuse (104) de la tige entraînée (64).

4. Unité d'entraînement linéaire selon la revendication 1 ou 2, caractérisée par les propriétés suivantes :
    a) la tige entraînée (64) présente une zone creuse (104), qui s'étend en partie sur le carter (54) et prend appui, en périphérie extérieure du carter (54), de façon à pouvoir se déplacer axialement;
    b) à la transmission de conversion (62) appartient un élément d'entraînement (92), pouvant être entraîné en rotation par le moteur (58), qui présente, sur sa périphérie extérieure, un profilage cannelé périphérique (160) ainsi qu'une denture (162);
    c) plusieurs corps planétaires (166), pouvant tourner autour d'axes propres, qui présentent chacun un profilage cannelé périphérique (172) ainsi qu'une denture (174);
    d) la mise en prise des profilages cannelés périphériques (172) du corps planétaire (166), radialement intérieurement, avec le profilage cannelé périphérique (160) de l'élément d'entraînement (92) et, radialement extérieurement, avec un profilage cannelé périphérique (164) réalisé sur la périphérie intérieure de la zone creuse (104) de la tige entraînée (64), ainsi qu'une mise en contact des dentures (174) du corps planétaire (166) avec la denture (162) de l'élément d'entraînement (92);

e) une réalisation des profilages cannelés (150,172,164) de l'élément d'entraînement (92), des corps planétaires (166) et de la zone creuse (104) de la tige entraînée, telle que lors de la rotation de ces pièces entre l'élément d'entraînement (92) et les corps planétaires (166) il ne se produit aucun mouvement relatif axial et que la tige entraînée (64) effectue un mouvement relatif axial par rapport aux corps planétaires (166).

5. Unité d'entraînement linéaire selon la revendication 4, caractérisée en ce que les profilages cannelés (150,172) de l'élément d'entraînement (92) et des corps planétaires (166) sont réalisés sous forme de filetage, le sens du pas du filetage des corps planétaires (166) étant opposé à celui de l'élément d'entraînement (92).

6. Unité d'entraînement linéaire selon la revendication 5, caractérisée en ce que le diamètre primitif du filetage, ainsi que celui de la denture de l'élément d'entraînement (92) sont un multiple par n du diamètre primitif du filetage concerné ainsi que de la denture concernée des corps planétaires (166); et que le filetage des corps planétaires (166) est à un filet et que le filetage de l'élément d'entraînement (92) est à n filets; n étant un nombre entier égal à 1, 2, 3, etc.

7. Unité d'entraînement linéaire selon l'une des revendications 4 à 6, caractérisée en ce que les corps planétaires (166) sont montés à rotation dans deux bagues (168) pouvant tourner par rapport à l'élément d'entraînement (92).

8. Unité d'entraînement linéaire selon l'une des revendications 3 à 7, caractérisée en ce que l'espace situé entre le carter (54) et la zone creuse (104) de la tige entraînée (64) contient un lubrifiant et que des canaux de passage de lubrifiant (126) axiaux sont prévus dans l'élément d'entraînement (92).

9. Unité d'entraînement linéaire selon l'une des revendications 1 à 8, caractérisée en ce qu'une paroi de délimitation (182) du carter (54), à travers laquelle est passée la partie de fixation (198), est fixée par un serrage à bague conique (186,188), sur le carter (54).

10. Unité d'entraînement linéaire selon l'une des revendications 1 à 9, caractérisée en ce qu'une autre partie de fixation (66) est prévue, sur l'extrémité axiale opposé au carter (54), sur la tige entraînée (64), fixée de préférence par vissage, injection ou serrage par bague conique.

11. Unité d'entraînement linéaire selon l'une des revendications 1 à 10, caractérisée en ce qu'à l'extrémité, opposée à la partie de fixation (198), est prévue sur le carter (54) une paroi de délimitation (70), de préférence par serrage par bague conique, et que de préférence entre la paroi de délimitation (70) et l'élément d'entraînement (92) de la transmission de conversion (62) est prévue un palier de butée axiale (98).

12. Unité d'entraînement linéaire selon l'une des revendications 3 à 11, caractérisée en ce qu'entre le moteur (58) et l'élément d'entraînement est prévu une transmission de réduction, de préférence une transmission de réduction planétaire à un ou plusieurs étages (60).

13. Unité d'entraînement linéaire selon la revendication 12, caractérisée en ce que la transmission de réduction (60) est logée dans le carter (54).

14. Unité d'entraînement linéaire selon l'une des revendications 3 à 13, caractérisée en ce que le carter (54) est plus long du côté opposé à l'élément d'entraînement (92) que nécessaire pour le logement du moteur (58) et, le cas échéant, de la transmission (60), de préférence par adjonction d'une partie de prolongement de carter.

15. Unité d'entraînement linéaire selon l'une des revendications 1 à 10, caractérisée par au moins un interrupteur de fin de course (120), pouvant être actionné au moyen d'une pièce d'actionnement (116) déplaçable linéairement.

16. Unité d'entraînement linéaire selon la revendication 15, caractérisée en ce qu'à l'arbre (90) qui entraîne l'élément d'entraînement (92) est couplé un arbre de transmission (58) qui passe par le rotor creux (78) du moteur et, le cas échéant par la transmission de réduction (60) et est en prise, de l'autre côté axial du moteur (58), réalisé sous forme d'une broche filetée (96), avec un écrou baladeur (116) servant de pièce d'actionnement d'un interrupteur de fin de course.

17. Unité d'entraînement linéaire selon l'une des revendications 3 à 16, caractérisée en ce que le filetage intérieur (102) ou le profilage cannelé périphérique (164) est prévu sur la périphérie intérieure de la tige entraînée (64), sur au moins deux douilles, placées axialement l'une dans l'autre, bloquées par soudage dans un tube commun sur lequel elles ont été passées.

FIG. 1

FIG. 2A

FIG. 2B

16

FIG. 3A

FIG. 3B

EP 0 258 522 B1